# EUROPEAN PATENT APPLICATION

(11) **EP 2 070 456 A1**
(43) Date of publication of application: **17.06.2009**
(21) Application number: 08166821.2
(22) Date of filing: 16.10.2008
(51) Int. Cl.: A47J 31/44

(54) **Steam dispenser**

(30) Priority: 17.10.2007 IT MC20070204
(71) Applicant: Nuova Simonelli S.p.A., 62031 Belforte del Chienti (MC) (IT)
(72) Inventor: Boldrini, Graziano, 62029, TOLENTINO (MC) (IT); Merelli, Francesco, 62010, POLLENZA (MC) (IT)
(74) Representative: Baldi, Claudio

(57) **Abstract**

The present invention relates to a steam dispenser (1) of the type normally provided in espresso coffee machines, which comprises a first unit designed to adjust the dispensing time (2) and a second unit designed to adjust the steam flow (3), which are controlled separately.

## Description

The present invention relates to a steam dispenser, of the type normally used in espresso coffee machines for professional or domestic use, according to the preamble of claim 1.

Two types of dispensers are currently available on the market: manual dispensers and automatic dispensers.

In the case of manual dispensers the operator actuates a control element, such as an oscillating lever or a rotary knob to adjust the steam flow and dispensing time.

When the operator wants to heat a drink with steam, he actuates the control element until the desired result is obtained.

A first inconvenience of this type of manual dispensers is that the quality of the result is strictly related to the experience of the operator, who simultaneously adjusts the dispensing time and the flow of the steam according to his experience. For this reasons, results are not uniform and mistakes are possible with operators having a limited experience.

Another inconvenience consists in the fact that the same operator may not obtain the same result during the preparation of the same drink, since no reference points are provided and the operator must rely on his memory to select the correct flow and dispensing time of the steam. In fact, when preparation is finished, the control element is brought back to position "zero" to close the steam flow.

In spite of the good flexibility shown in case of different drinks and preparation modes, the fact that the steam flow and dispensing time are adjusted simultaneously does not guarantee the best results always, as illustrated above.

In case of automatic dispensers the operator actuates a control button that controls the opening of an electrovalve, from a completely closed to completely open position, which corresponds to the maximum flow of the steam. In some machines the operator actuates a single button that dispenses the maximum steam flow while it is pressed; in other machines different buttons are provided and connected to a timer, each of them being associated with a particular drink. In this case, once it is actuated, the button opens the electrovalve for a predefined time.

Basically, with this type of dispensers, the operator only adjusts the dispensing time of the steam.

In spite of the fact that drinks can be prepared by operators with limited experience, this type of dispensers is impaired by the fact that the operator cannot adjust the flow of the steam: in fact, the electrovalve goes from a completely closed position, in which the steam flow is zero, to a completely open position, in which the steam flow is at the maximum level. For this reason, the flexibility of this machine is extremely low, since one of the two parameters (flow and dispensing time) cannot be adjusted.

The good preparation of some drinks, such as cappuccino, depends on a series of factors, such as the temperature and quantity of the milk contained in the jug when the milk is heated with steam. A good preparation requires not only to adjust the dispensing time, but also the flow of the steam, in such a way to obtain a foam with correct density to prepare high-quality drinks.

In this case, automatic dispensers do not allow for fine adjustment, because the parameter of steam flow is fixed.

Therefore, regardless of the advantageous fact that the preparation of drinks is not dependant on the operator's experience, automatic dispensers, in which the parameter of steam flow is standardised with a simple on-off function, do not allow to prepare high-quality drinks, except when the characteristics of the drink coincide with the ones that are preconfigured on the machine.

In conclusion, the dispensers according to the known art either provide for the simultaneous adjustment of steam flow and dispensing time, or only the adjustment of the steam dispensing time, while keeping the steam flow fixed.

The purpose of the present invention is to overcome the aforementioned inconveniences by means of a steam dispenser as claimed in claim 1.

The steam dispenser according to the present invention comprises a first unit designed to adjust the steam dispensing time, which consists in an electrovalve, and a second unit designed to progressively adjust the steam flow, which consists in a manual dispenser, which are controlled separately.

The electrovalve opens and closes the main feed conduit of the steam, while the manual dispenser is actuated by the operator to adjust the flow of the steam from a maximum to a minimum value, which is never equal to zero, since the dispensing of the steam is interrupted by the actuation of the electrovalve, and not of the manual dispenser.

The steam dispenser of the present invention advantageously allows for the separate adjustment of both parameters, meaning the dispensing time and flow of the steam, thus overcoming the inconveniences of dispensers of the known art.

As a matter of fact, the advantages of the present invention consist in the possibility for the operator to select the correct steam flow for the specific drink to be prepared/heated by means of the manual valve.

The operator can control steam dispensing by means of the control button of the electrovalve to dispense the steam for the desired time period.

When the operator has to prepare the same drink, he can advantageously set the correct flow of the steam for the specific drink and simply actuate the electrovalve repeatedly for the next drinks, having already set the steam flow with the manual valve.

Therefore, the flexibility of use and reproducibility of results are extremely advantageous characteristics.

The present invention also relates to an espresso coffee machine for professional or domestic use, which comprises a steam dispenser according to the above.

Another purpose of the present invention is a method used to control steam dispensing in espresso coffee machines, for professional or domestic use, which comprises at least the separate adjustment of the steam flow and dispensing time.

These and other purposes of the present invention will appear more evident from the following description and attached drawings, which are provided for a merely illustrative, not limiting sense, wherein:

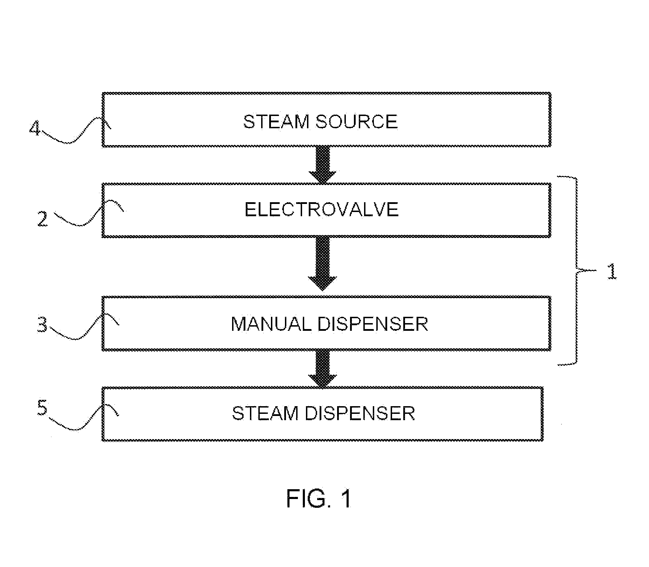

fig. 1 is a block diagram of the dispenser according to the present invention.

Fig. 1 illustrates a steam dispenser for espresso coffee machines for professional or domestic use.

The dispenser of the present invention identified with numeral (1) comprises a first unit designed to adjust the dispensing time (2) and a second unit designed to progressively adjust the flow of the steam (3), which are controlled separately.

The executive embodiment of fig. 1 illustrates a block diagram in which the unit designed to adjust the steam dispensing time (2) consists in an electrovalve, while the unit designed to progressively adjust the steam flow (3) consists in a manual dispenser.

The unit designed to adjust the dispensing time (2), or electrovalve, is connected upstream to a steam source (4) of known type that generates steam, typically a boiler provided with an electrically or gas-heated heating element.

A manual tap (3) is provided downstream the electrovalve (2), and a steam distributor (5) is provided downstream the manual tap (3), being for instance a simple conduit with dispensing head of known type.

Both the electrovalve (2) and the manual tap (3) are of known type and may be replaced by the experts of the art with equivalent devices without leaving the scope and precepts of the present invention.

The electrovalve (2) is controlled by means of a control element, for instance a control button, not shown, which sends a control signal to the electrovalve (2) to open or close the electrovalve (2).

The present invention may be provided with either a control button of single-pressure type, which maintains the electrovalve open while the button is pressed and closes the valve when the button is released, or a double-pressure button, which changes the state of the electrovalve from open to close and vice versa every time the button is pressed.

When the electrovalve (2) is opened, the steam passes from the steam source (4) to the manual tap (3) at the maximum flow possible.

The manual tap (3) can be controlled with an oscillating lever, a rotary knob or similar element to progressively adjust the steam flow from a minimum to a maximum value.

Preferably, the minimum flow value is never zero, being at least higher than zero. Advantageously, this avoids damaging the dispenser (1). In fact, if the operator unintentionally presses the control button of the electrovalve (2) without previously setting the steam flow on the manual tap (3), the steam pressure can be discharged outside, without damaging the dispenser (1) or the machine provided with it.

Advantageously, the knob or lever of the manual tap (3) can be provided with reference symbols, markings or texts for each type of drink to be heated, in such a way to assist operators with limited experience and allow them to set the steam flow in the correct position, and adjust only the dispensing time of the steam with the button of the electrovalve (2).

Advantageously, a timer can be associated with the electrovalve (2), in such a way to time the opening of the electrovalve (2).

The method that uses the steam dispenser (1) according to the present invention consists in the possibility to adjust the steam flow and dispensing time separately, and not simultaneously.

In particular, the method according to the present invention provides for the preliminary adjustment of the steam flow and for the subsequent adjustment of the steam dispensing time.

More specifically, the method provides for adjusting the steam flow by means of a progressive adjustment device with minimum flow higher than zero, and the dispensing time by means of a device of open/close type installed upstream the progressive adjustment device.

According to a different embodiment of the present invention the manual tap (2) is installed upstream the electrovalve (3), basically inverting the positions of the electrovalve (2) and manual tap (3) of fig. 1.

In this case the electrovalve (2) adjusts the introduction of steam at a flow value predefined by the manual tap (3).

It must be noted that, also in this case, the adjustment of the steam flow and dispensing time are controlled separately, according to the precepts of the present invention.

## Claims

**1.** Steam dispenser (1), in particular for espresso coffee machines, **characterised in that** it comprises a first unit designed to adjust the steam dispensing time (2) and a second unit designed to adjust the steam flow (3), which are controlled separately.

**2.** Steam dispenser (1) as claimed in claim 1, **characterised in that** the second unit designed to adjust the steam flow (3) is of progressive type.

**3.** Steam dispenser (1) as claimed in claim 1 or 2, **characterised in that** the first unit designed to adjust the dispensing time comprises at least an electrovalve (2) that can be controlled from a first opening position to a second closing position and the second unit designed to progressively adjust the steam flow comprises a manual tap (3) of progressive open/close type.

**4.** Steam dispenser (1) as claimed in one or more of the above claims, **characterised in that** the electrovalve (2) is controlled by means of a control element, such as a control button or similar, which is designed to send a control signal to the electrovalve (2) to open or close the electrovalve (2).

**5.** Steam dispenser (1) as claimed in one or more of the above claims, **characterised in that** the control button is of single-pressure type and maintains the electrovalve open when the button is pressed and closes the electrovalve when the button is released.

**6.** Steam dispenser (1) according to one or more of claims 1 to 4, **characterised in that** the control button is of double-pressure type, and changes the state of the electrovalve (2) from open to close and vice versa every time the button is pressed.

**7.** Steam dispenser (1) as claimed in one or more of the above claims, **characterised in that** the manual tap (3) is controlled with an oscillating lever, rotary knob or similar element to progressively adjust the steam flow from a minimum to a maximum value.

**8.** Steam dispenser (1) as claimed in claim 7, **characterised in that** the minimum flow value is never zero, and is at least higher than zero.

**9.** Steam dispenser (1) as claimed in one or more of the above claims, **characterised in that** the control knob or lever of the manual tap (3) is provided with reference symbols, markings or texts.

**10.** Steam dispenser (1) as claimed in one or more of the above claims, **characterised in that** the first unit designed to adjust the dispensing time (2) is installed upstream the second unit designed to adjust the steam flow (3).

**11.** Steam dispenser (1) as claimed in one or more of the above claims, **characterised in that** the first unit designed to adjust the dispensing time (2) is installed downstream the second unit designed to adjust the steam flow (3).

**12.** Steam dispenser (1) as claimed in one or more of the above claims, **characterised in that** a timer is associated with the electrovalve (2) in order to time the opening of the electrovalve (2).

**13.** Method used to control steam dispensing in espresso coffee machines for professional or domestic use, **characterised in that** the said method comprises at least the separate adjustment of the steam flow and dispensing time.

**14.** Method as claimed in claim 13, **characterised in that** the separate adjustment of the steam flow and dispensing time is obtained by using separate control means.

**15.** Method as claimed in claim 13 or 14, **characterised in that** it comprises at least the following sequence of operations:
a. adjustment of steam flow
b. adjustment of steam dispensing time.

**16.** Method as claimed in one or more of claims 13 to 15, **characterised in that** the steam flow is adjusted by means of a progressive adjustment device with minimum flow value higher than zero, and the steam dispensing time is adjusted by means of a device of open/close type installed upstream the progressive adjustment device.

**16.** Method as claimed in one or more of claims 13 to 15, **characterised in that** it is obtained with a steam dispenser (1) as claimed in one or more of claims 1 to 12.

**17.** Espresso coffee machine for professional or domestic use, **characterised in that** it comprises a steam dispenser (1) as claimed in one or more of claims 1 to 12.

**18.** Espresso coffee machine for professional or domestic use, **characterised in that** it implements one or more steps of the method claimed in one or more of claims 13 to 16.

**19.** Espresso coffee machine as claimed in claim 17, **characterised in that** it comprises the characteristic claimed in claim 18.
